# EUROPÄISCHE PATENTSCHRIFT

(11) **EP 1 214 535 B1**
(45) Veröffentlichungstag und Bekanntmachung des Hinweises auf die Patenterteilung: **07.05.2003**
(21) Anmeldenummer: 00964185.3
(22) Anmeldetag: 16.09.2000
(51) Int. Cl.: F16H 57/00, F16H 1/46, B66D 1/22

(54) **PLANETENGETRIEBE FÜR HEBEZEUGE**
PLANETARY GEAR FOR LIFTING DEVICES
ENGRENAGE PLANETAIRE POUR APPAREIL DE LEVAGE

(30) Priorität: 25.09.1999 DE 19946029
(43) Veröffentlichungstag der Anmeldung: 19.06.2002
(73) Patentinhaber: ZF FRIEDRICHSHAFEN Aktiengesellschaft, 88038 Friedrichshafen (DE)
(72) Erfinder: BUCK, Gerhard, 88048 Friedrichshafen (DE); TASCHE, Jochen, 88048 Friedrichshafen (DE); MANN, Egon, 88045 Friedrichshafen (DE)
(86) Internationale Anmeldenummer: EP0009065
(87) Internationale Veröffentlichungsnummer: WO01023780

(56) Entgegenhaltungen:
- DE-A- 4 435 849
- US-A- 1 350 822
- US-A- 3 203 275
- US-A- 4 864 893
- US-A- 5 679 089
- HIDAKA TERUAKI ET AL: "DYNAMIC BEHAVIOR OF PLANETARY GEAR - 6. INFLUENCE OF MESHING-PHASE" BULL JSME JUL 1979, Bd. 22, Nr. 169, Juli 1979 (1979-07), Seiten 1026-1033, XP000980150

## Beschreibung

Die Erfindung bezieht sich auf ein Planetengetriebe nach der im Oberbegriff von Anspruch 1 näher definierten Art.

Planetengetriebe werden häufig zum Antrieb von Hebezeugen und Personenaufzügen verwendet, da sie sich durch ihre kompakte Bauweise und einen koaxialen Antriebsstrang auszeichnen.

Die DE 44 35 849 A1 offenbart einen Hebezeugantrieb, bei welchem ein Antriebsmotor ein inneres Zentralrad einer ersten Planetenstufe antreibt, deren Hohlrad drehfest gehalten ist, und deren Planetenträger ein inneres Zentralrad einer zweiten Planetenstufe antreibt, deren Hohlrad drehfest gehalten ist, und deren Planetenträger mit einer Seiltrommel in Verbindung steht und den Abtrieb bildet. Über die Seiltrommel wird mit Hilfe eines Seiles vorzugsweise eine Kabine für einen Personenaufzug befördert. Bei einem Hebezeugantrieb mit Planetengetriebe treten hauptsächlich zwei Geräuschemissionen auf: Von der ersten Planetenstufe, welche ein höheres Drehzahlniveau aufweist, wird hauptsächlich Luftschall erzeugt, welcher von der Planetenstufe auf das Gehäuse des Planetengetriebes übertragen und als Luftschall abgestrahlt wird. Dieser Luftschall kann sich im Maschinenraum und im Aufzugschacht störend bemerkbar machen und muß vorzugsweise bei Personenaufzügen verringert werden. Bei der zweiten Planetenstufe treten hauptsächlich Schwingungen durch Variation des Abtriebsdrehmomentes auf, welche über die Seile auf die Kabine übertragen werden und sich störend auswirken. Diese Schwingungen liegen im Frequenzbereich infolge der niedrigeren Drehzahl der zweiten Planetenstufe niedriger und können den Kabinenaufbau im Resonanzbereich anregen.

Der vorliegenden Erfindung liegt die Aufgabe zugrunde, ein Planetengetriebe zu schaffen, welches höherfrequente, vorzugsweise Luftschall erzeugende Emissionen der ersten Planetenstufe und niederfrequente Emissionen, vorzugsweise Drehschwingungen der zweiten Planetenstufe, verringern.

Die Aufgabe wird mit einem auch die kennzeichnenden Merkmale des Hauptanspruchs aufweisenden, gattungsgemäßen Planetengetriebe gelöst.

Erfindungsgemäß wird die erste Planetenstufe mit einem gleichzeitigen Zahneingriff ausgeführt, wobei die erste Planetenstufe vorzugsweise drei, jedoch auch mehr Planeten aufweisen kann. Da die höherfrequenten Emissionen der ersten Planetenstufe hauptsächlich aus Radialschwingungen des inneren Zentralrades erzeugt werden, indem das innere Zentralrad in radialer Richtung bei jedem Zahneingriff bei nicht gleichzeitigem Zahneingriff in radialer Richtung ausgelenkt wird, kann, indem die erste Planetenstufe mit gleichzeitigem Zahneingriff ausgeführt wird und somit gleichzeitig der Zahneingriff von jedem Planetenrad mit dem inneren Zentralrad erfolgt, das innere Zentralrad zentriert werden. Eine dadurch entstehende Drehmomentschwankung am Abtrieb der ersten Planetenstufe, da sich der Zahneingriff am inneren Zentralrad in radialer Richtung von allen Planeten gleichzeitig ändert, wirkt sich bei der ersten Planetenstufe weniger störend aus, da das Abtriebsdrehmoment der ersten Planetenstufe im Verhältnis zum Abtriebsdrehmoment der zweiten Planetenstufe deutlich geringer ist. Wird eine ganzzahlige Anzahl der Planeten in der ersten Planetenstufe verwendet, vorzugsweise vier Planeten, kann auch eine kreuzförmige Eingriffsfolge der Verzahnung der Planetenräder mit der Verzahnung des inneren Zentralrades verwendet werden, da bei einer kreuzförmigen Eingriffsfolge das innere Zentralrad in radialer Richtung zentriert wird und keine Drehmomentschwankungen auftreten. Somit werden die Drehschwingungen, welche durch Drehmomentschwankungen erzeugt werden, und die Radialschwingungen, welche durch radiales Auslenken des inneren Zentralrades erzeugt werden, deutlich verringert oder im Idealfall eliminiert. Die zweite Planetenstufe, deren Planetenträger vorzugsweise den Abtrieb bildet, wird mit einem umlaufenden Zahneingriff der Planetenräder mit dem inneren Zentralrad ausgeführt, da sich bei der niedrigeren Drehzahl der zweiten Planetenstufe die dadurch entstehenden Radialschwingungen durch die radiale Auslenkung des inneren Zentralrades nicht sehr störend auswirken, jedoch die störenden Drehmomentschwankungen durch einen umlaufenden Zahneingriff verringert bzw. im Idealfall eliminiert werden. Beim umlaufenden Zahneingriff greift die Verzahnung des Planetenrades nicht gleichzeitig mit anderen Planetenrädern in die Verzahnung des inneren Zentralrades ein. Somit gleichen sich die radialen Hebelarmunterschiede beim Zahneingriff am inneren Zentralrad gegenseitig aus, wodurch die Drehmomentschwankungen reduziert werden. Wird die zweite Planetenstufe mit einer ganzzahligen Anzahl von Planeten ausgeführt, ist vorzugsweise ein kreuzförmiger Zahneingriff zu verwenden, bei welchem das innere Zentralrad zentriert ist und somit Radialschwingungen verringert werden und durch ein nahezu gleichbleibendes Abtriebsdrehmoment Drehschwingungen reduziert sind. Es ist jedoch auch bei einer ganzzahligen Anzahl von Planeten ein umlaufender Zahneingriff möglich. Vorzugsweise wird die zweite Planetenstufe mit vier Planeten ausgeführt, jedoch ist auch eine andere Anzahl von Planeten denkbar. Als Abtrieb der ersten Planetenstufe kann der Planetenträger verwendet werden, wobei das Hohlrad der ersten Planetenstufe drehfest gehalten ist, es sind jedoch auch ein drehfest gehaltener Planetenträger und das Hohlrad als Abtrieb denkbar. Als Abtrieb der zweiten Planetenstufe wird vorzugsweise der Planetenträger verwendet, wobei das Hohlrad drehfest gehalten ist, es sind jedoch auch ein drehfest gehaltener Planetenträger und das Hohlrad als Abtrieb denkbar. Zum Antrieb des inneren Zentrairades der ersten Planetenstufe wird vorzugsweise ein Antriebsmotor, welcher als Elektromotor oder Hydraulikmotor ausgeführt sein kann, verwendet. Der Abtrieb der zweiten Planetenstufe ist vorzugsweise mit einer Seiltrommel verbunden. Es ist jedoch auch möglich, dieses Planetengetriebe zum Antrieb eines Rades für Mobilfahrzeuge zu verwenden.

Weitere Ausgestaltungsmöglichkeiten sind der Figuren-Beschreibung zu entnehmen.

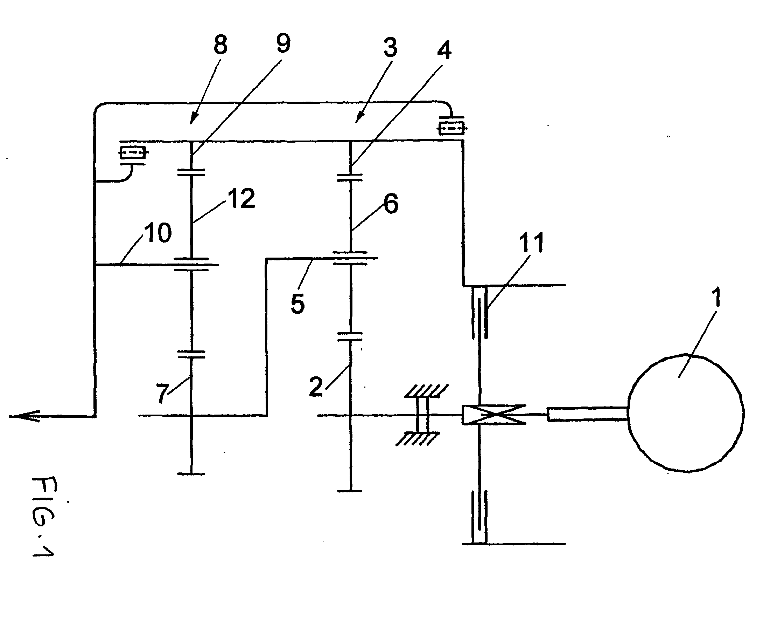

Die einzige Figur zeigt ein Schema eines Planetengetriebes im Halbschnitt mit einem Antriebsmotor 1, welcher ein inneres Zentralrad 2 einer ersten Planetenstufe 3 antreibt, deren Hohlrad 4 drehfest gehalten ist und deren Planetenträger 5 den Abtrieb bildet. Vorzugsweise werden drei Planetenräder 6 verwendet. Der Planetenträger 5 treibt in inneres Zentralrad 7 einer zweiten Planetenstufe 8 an, deren Hohlrad 9 drehfest gehalten ist und deren Planetenträger 10 den Abtrieb bildet. Vorzugsweise ist der Planetenträger 10 mit einer nicht dargestellten Seiltrommel verbunden. Zwischen dem Antriebsmotor 1 und dem inneren Zentralrad 2 der ersten Planetenstufe 3 kann eine Bremse 11 vorhanden sein, wobei der Antriebsmotor 1 auch direkt mit dem inneren Zentralrad 2 verbunden sein kann, und sich die Bremse 11 direkt an den Antriebsmotor 1 anschließt. Es ist auch möglich, den Planetenträger 10 zu bremsen. Die erste Planetenstufe 3 weist einen gleichzeitigen Zahneingriff oder einen kreuzförmigen Zahneingriff auf. Die zweite Planetenstufe 8 weist einen umlaufenden Zahneingriff oder einen kreuzförmigen Zahneingriff auf. Die erste Planetenstufe 3 ist vorzugsweise mit drei Planetenrädern 6 und die zweite Planetenstufe 8 ist vorzugsweise mit vier Planetenrädern 12 ausgeführt. Ein kreuzförmiger Zahneingriff kann nur bei einer ganzzahligen Anzahl von Planetenrädern 6 oder 12 verwendet werden. Vorzugsweise sind folgende Zähnezahlkombinationen für die erste und zweite Planetenstufe möglich.

Zähnezahlen:

| Erste Planetenstufe | | | Zweite Planetenstufe | | |
|---|---|---|---|---|---|
| Inneres Zentralrad 2 | Planetenrad 6 | Hohlrad 4 | Inneres Zentralrad 7 | Planetenrad 12 | Hohlrad 9 |
| 33 | 30 | 93 | 18 | 35 | 90 |
| 21 | 36 | 93 | 18 | 35 | 90 |
| 15 | 38 | 93 | 18 | 35 | 90 |
| | | | | | |
| 33 | 35 | 105 | 18 | 29 | 78 |
| 21 | 41 | 105 | 18 | 29 | 78 |
| 15 | 44 | 105 | 18 | 29 | 78 |

### Bezugszeichen

- 1: Antriebsmotor
- 2: inneres Zentralrad
- 3: erste Planetenstufe
- 4: Hohlrad
- 5: Planetenträger
- 6: Planetenrad
- 7: inneres Zentralrad
- 8: zweite Planetenstufe
- 9: Hohlrad
- 10: Planetenträger
- 11: Bremse
- 12: Planetenrad

## Patentansprüche

1. Planetengetriebe mit einer ersten Planetenstufe (3), mit einem inneren Zentralrad (2), einer Vielzahl von Planetenrädern (6) und einem Hohlrad (4), welche von einem Antriebsmotor (1) angetrieben wird und einer zweiten Planetenstufe (8) mit einem inneren Zentralrad (7), einer Vielzahl von Planetenrädern (12) und einem Hohlrad (9), welche vom Abtrieb der ersten Planetenstufe (3) angetrieben wird und die erste Planetenstufe (3) einen gleichzeitigen Zahneingriff ihrer Planetenräder (6) mit ihrem inneren Zentralrad (2) aufweist, wobei der Abtrieb der zweiten Planetenstufe (8) eine Seiltrommel für einen Aufzug oder ein Hebezeug antreibt, **dadurch gekennzeichnet , daß** die zweite Planetenstufe (8) einen umlaufenden Zahneingriff ihrer Planetenräder (12) mit ihrem inneren Zentralrad (7) aufweist, so daß störende Drehmoment-Schwankungen verringert werden.

2. Planetengetriebe nach Anspruch 1, **dadurch gekennzeichnet, daß** das innere Zentralrad (2) der ersten Planetenstufe den Antrieb bildet, ein Planetenträger (5) der ersten Planetenstufe (3) ein inneres Zentralrad (7) der zweiten Planetenstufe (8) antreibt, der Planetenträger (10) der zweiten Planetenstufe (8) den Abtrieb bildet und das Hohlrad (4) der ersten Planetenstufe (3) und das Hohlrad (9) der zweiten Planetenstufe (8) drehfest gehaltert sind.

3. Planetengetriebe nach Anspruch 1, **dadurch gekennzeichnet, daß** das erste Planetengetriebe (3) von einem Elektromotor (1) angetrieben wird.

4. Planetengetriebe nach Anspruch 1, **dadurch gekennzeichnet, daß** die erste Planetenstufe (3) drei Planetenräder (5) aufweist und die zweite Planetenstufe (8) vier Planetenräder (12) aufweist.

5. Planetengetriebe nach Anspruch 1, **dadurch gekennzeichnet, daß** das Planetengetriebe folgende Zähnezahlen aufweist:
| Erste Planetenstufe | | | Zweite Planetenstufe | | |
|---|---|---|---|---|---|
| Inneres Zentralrad 2 | Planetenrad 6 | Hohlrad 4 | Inneres Zentralrad 7 | Planetenrad 12 | Hohlrad 9 |
| 33 | 30 | 93 | 18 | 35 | 90 |

6. Planetengetriebe nach Anspruch 1, **dadurch gekennzeichnet, daß** das Planetengetriebe folgende Zähnezahlen aufweist:
| Erste Planetenstufe | | | Zweite Planetenstufe | | |
|---|---|---|---|---|---|
| Inneres Zentralrad 2 | Planetenrad 6 | Hohlrad 4 | Inneres Zentralrad 7 | Planetenrad 12 | Hohlrad 9 |
| 21 | 36 | 93 | 18 | 35 | 90 |

7. Planetengetriebe nach Anspruch 1, dadurch **gekenn*z*eichnet**, daß das Planetengetriebe folgende Zähnezahlen aufweist:
| Erste Planetenstufe | | | Zweite Planetenstufe | | |
|---|---|---|---|---|---|
| Inneres Zentralrad 2 | Planetenrad 6 | Hohlrad 4 | Inneres Zentralrad 7 | Planetenrad 12 | Hohlrad 9 |
| 15 | 38 | 93 | 18 | 35 | 90 |

8. Planetengetriebe nach Anspruch 1, **dadurch gekennzeichnet, daß** das Planetengetriebe folgende Zähnezahlen aufweist:
| Erste Planetenstufe | | | Zweite Planetenstufe | | |
|---|---|---|---|---|---|
| Inneres Zentralrad 2 | Planetenrad 6 | Hohlrad 4 | Inneres Zentralrad 7 | Planetenrad 12 | Hohlrad 9 |
| 33 | 35 | 105 | 18 | 29 | 78 |

9. Planetengetriebe nach Anspruch 1, **dadurch gekennzeichnet, daß** das Planetengetriebe folgende Zähnezahlen aufweist:
| Erste Planetenstufe | | | Zweite Planetenstufe | | |
|---|---|---|---|---|---|
| Inneres Zentralrad 2 | Planetenrad 6 | Hohlrad 4 | Inneres Zentralrad 7 | Planetenrad 12 | Hohlrad 9 |
| 21 | 41 | 105 | 18 | 29 | 78 |

10. Planetengetriebe nach Anspruch 1, **dadurch gekennzeichnet, daß** das Planetengetriebe folgende Zähnezahlen aufweist:
| Erste Planetenstufe | | | Zweite Planetenstufe | | |
|---|---|---|---|---|---|
| Inneres Zentralrad 2 | Planetenrad 6 | Hohlrad 4 | Inneres Zentralrad 7 | Planetenrad 12 | Hohlrad 9 |
| 15 | 44 | 105 | 18 | 29 | 78 |

## Claims

1. Planetary gear train having a first planetary stage (3) which has an inner central gear (2), a plurality of planet gears (6) and a ring gear (4) and which is driven by a driving motor (1), and having a second planetary stage (8) which has an inner central gear (7), a plurality of planet gears (12) and a ring gear (9) and which is driven by the output drive of the first planetary stage (3), the first planetary stage (3) having simultaneous meshing of its planet gears (6) with its inner central gear (2), wherein the output drive of the second planetary stage (8) drives a cable drum for a lift or a lifting appliance,
**characterised in that**
the second planetary stage (8) has circulatory meshing of its planet gears (12) with its inner central gear (7), so that disturbing fluctuations in torque are diminished.

2. Planetary gear train according to claim 1,
**characterised in that**
the inner central gear (2) of the first planetary stage constitutes the drive, a planet-carrier (5) belonging to the first planetary stage (3) drives an inner central gear (7) belonging to the second planetary stage (8), the planet-carrier (10) of the second planetary stage (8) constitutes the output drive, and the ring gear (4) of the first planetary stage (3) and the ring gear (9) of the second planetary stage (8) are fixed in a rotation-proof manner.

3. Planetary gear train according to claim 1,
**characterised in that**
the first planetary gear train (3) is driven by an electric motor (1).

4. Planetary gear train according to claim 1,
**characterised in that**
the first planetary stage (3) has three planet gears (5) and the second planetary stage (8) has four planet gears (12).

5. Planetary gear train according to claim 1,
**characterised in that**
the planetary gear train has the following numbers of teeth:
| First planetary stage | | | Second planetary stage | | |
|---|---|---|---|---|---|
| Inner central gear 2 | Planet gear 6 | Ring gear 4 | Inner central gear 7 | Planet gear 12 | Ring gear 9 |
| 33 | 30 | 93 | 18 | 35 | 90 |

6. Planetary gear train according to claim 1,
**characterised in that**
the planetary gear train has the following numbers of teeth:
| First planetary stage | | | Second planetary stage | | |
|---|---|---|---|---|---|
| Inner central gear 2 | Planet gear 6 | Ring gear 4 | Inner central gear 7 | Planet gear 12 | Ring gear 9 |
| 21 | 36 | 93 | 18 | 35 | 90 |

7. Planetary gear train according to claim 1,
**characterised in that**
the planetary gear train has the following numbers of teeth:
| First planetary stage | | | Second planetary stage | | |
|---|---|---|---|---|---|
| Inner central gear 2 | Planet gear 6 | Ring gear 4 | Inner central gear 7 | Planet gear 12 | Ring gear 9 |
| 15 | 38 | 93 | 18 | 35 | 90 |

8. Planetary gear train according to claim 1,
**characterised in that**
the planetary gear train has the following numbers of teeth:
| First planetary stage | | | Second planetary stage | | |
|---|---|---|---|---|---|
| Inner central gear 2 | Planet gear 6 | Ring gear 4 | Inner central gear 7 | Planet gear 12 | Ring gear 9 |
| 33 | 35 | 105 | 18 | 29 | 78 |

9. Planetary gear train according to claim 1,
**characterised in that**
the planetary gear train has the following numbers of teeth:
| First planetary stage | | | Second planetary stage | | |
|---|---|---|---|---|---|
| Inner central gear 2 | Planet gear 6 | Ring gear 4 | Inner central gear 7 | Planet gear 12 | Ring gear 9 |
| 21 | 41 | 105 | 18 | 29 | 78 |

10. Planetary gear train according to claim 1,
**characterised in that**
the planetary gear train has the following numbers of teeth:
| First planetary stage | | | Second planetary stage | | |
|---|---|---|---|---|---|
| Inner central gear 2 | Planet gear 6 | Ring gear 4 | Inner central gear 7 | Planet gear 12 | Ring gear 9 |
| 15 | 44 | 105 | 18 | 29 | 78 |

## Revendications

1. Engrenage planétaire comprenant un premier étage planétaire (3) qui comporte une roue centrale intérieure (2), une pluralité de roues planétaires (6) et une roue à denture intérieure (4) qui est entraînée par un moteur d'entraînement (1), et un second étage planétaire (8) comprenant une roue centrale intérieure (7) une pluralité de roues planétaires (12) et une roue à denture intérieure (9), qui est entraînée par l'organe de sortie du premier étage planétaire (3), le premier étage planétaire (3) comportant un engrènement simultané de ses roues planétaires (6) avec sa roue centrale intérieure (2), et l'organe de sortie du second étage planétaire (8) entraînant un tambour de câble pour un ascenseur ou un engin de levage, **caractérisé en ce que** le second étage planétaire (8) comporte un engrènement tournant de ses roues planétaires (12) avec sa roue centrale intérieure (7), de sorte que les fluctuations gênantes du couple sont réduites.

2. Engrenage planétaire selon la revendication 1, **caractérisé en ce que** la roue centrale intérieure (2) du premier étage planétaire forme l'entraînement, une cage de transmission planétaire (5) du premier étage planétaire (3) entraîne une roue planétaire intérieure (7) du second étage planétaire (8), la cage de transmission planétaire (10) du second étage planétaire (8) forme l'organe de sortie, et la roue à denture intérieure (4) du premier étage planétaire (3) et la roue à denture intérieure (9) du second étage planétaire (8) sont maintenues solidaires en rotation.

3. Engrenage planétaire selon la revendication 1, **caractérisé en ce que** le premier étage planétaire (3) est entraîné par un moteur électrique (1).

4. Engrenage planétaire selon la revendication 1, **caractérisé en ce que** le premier étage planétaire (3) comporte trois roues planétaires (6) et le second étage planétaire (8) comporte quatre roues planétaires (12).

5. Engrenage planétaire selon la revendication 1, **caractérisé en ce que** l'engrenage planétaire comporte les nombres de dents suivants :
| Premier étage planétaire | | | Second étage planétaire | | |
|---|---|---|---|---|---|
| Roue centrale intérieure 2 | Roue planétaire 6 | Roue à denture intérieure 4 | Roue centrale intérieure 7 | Roue planétaire 12 | Roue à denture intérieure 9 |
| 33 | 30 | 93 | 18 | 35 | 90 |

6. Engrenage planétaire selon la revendication 1, **caractérisé en ce que** l'engrenage planétaire comporte les nombres de dents suivants :
| Premier étage planétaire | | | Second étage planétaire | | |
|---|---|---|---|---|---|
| Roue centrale intérieure 2 | Roue planétaire 6 | Roue à denture intérieure 4 | Roue centrale intérieure 7 | Roue planétaire 12 | Roue à denture intérieure 9 |
| 21 | 36 | 93 | 18 | 35 | 90 |

7. Engrenage planétaire selon la revendication 1, **caractérisé en ce que** l'engrenage planétaire comporte les nombres de dents suivants :
| Premier étage planétaire | | | Second étage planétaire | | |
|---|---|---|---|---|---|
| Roue centrale intérieure 2 | Roue planétaire 6 | Roue à denture intérieure 4 | Roue centrale intérieure 7 | Roue planétaire 12 | Roue à denture intérieure 9 |
| 15 | 38 | 93 | 18 | 35 | 90 |

8. Engrenage planétaire selon la revendication 1, **caractérisé en ce que** l'engrenage planétaire comporte les nombres de dents suivants :
| Premier étage planétaire | | | Second étage planétaire | | |
|---|---|---|---|---|---|
| Roue centrale intérieure 2 | Roue planétaire 6 | Roue à 15 denture intérieure 4 | Roue centrale intérieure 7 | Roue planétaire 12 | Roue à denture intérieure 9 |
| 33 | 35 | 105 | 18 | 29 | 78 |

9. Engrenage planétaire selon la revendication 1, **caractérisé en ce que** l'engrenage planétaire comporte les nombres de dents suivants :
| Premier étage planétaire | | | Second étage planétaire | | |
|---|---|---|---|---|---|
| Roue centrale intérieure 2 | Roue planétaire 6 | Roue à denture intérieure 4 | Roue centrale intérieure 7 | Roue planétaire 12 | Roue à denture intérieure 9 |
| 21 | 41 | 105 | 18 | 29 | 78 |

10. Engrenage planétaire selon la revendication 1, **caractérisé en ce que** l'engrenage planétaire comporte les nombres de dents suivants :
| Premier étage planétaire | | | Second étage planétaire | | |
|---|---|---|---|---|---|
| Roue centrale intérieure 2 | Roue planétaire 6 | Roue à denture intérieure 4 | Roue cen70 trale intérieure 7 | Roue planétaire 12 | Roue à denture intérieure 9 |
| 15 | 44 | 105 | 18 | 29 | 78 |
